# EUROPEAN PATENT APPLICATION

(11) **EP 4 769 596 A1**
(43) Date of publication of application: **01.07.2026**
(21) Application number: 25227297.6
(22) Date of filing: 26.12.2025
(51) Int. Cl.: H01M 10/04, H01M 10/0585, H01M 50/545

(54) **SECONDARY BATTERY AND ELECTRONIC APPARATUS**

(30) Priority: 28.12.2024 CN 202411958766
(71) Applicant: Ningde Amperex Technology Ltd., Ningde City, Fujian Province 352100 (CN)
(72) Inventor: CHEN, Qiaofeng, Ningde City, Fujian Province, China, 352100 (CN); ZHENG, Xingfang, Ningde City, Fujian Province, China, 352100 (CN); ZHANG, Guowen, Ningde City, Fujian Province, China, 352100 (CN); YU, Jiaxu, Ningde City, Fujian Province, China, 352100 (CN)
(74) Representative: Icosa

(57) **Abstract**

The present application discloses a secondary battery and an electronic apparatus. The secondary battery includes a first shell, a second shell, and an electrode assembly. The first shell includes a first portion and a second portion, where the second portion surrounds an edge of the first portion. The second shell includes a third portion and a fourth portion, where the fourth portion surrounds an edge of the third portion; the second shell and the first shell are assembled together, and the second shell is insulatedly connected to the first shell. The electrode assembly includes a plurality of first electrode plates and a plurality of second electrode plates, where an outermost first electrode plate of the electrode assembly is a first sub-electrode plate; an outermost second electrode plate of the electrode assembly is a second sub-electrode plate. The first sub-electrode plate includes a first current collector, where the first current collector has a first surface and a second surface opposite to each other, and the first surface is electrically connected to the first portion; the second sub-electrode plate includes a second current collector, where the second current collector has a third surface and a fourth surface opposite to each other, and the third surface is electrically connected to the third portion. This solution is advantageous for reducing the dimension of the secondary battery and increasing the volumetric energy density of the secondary battery.

## Description

### TECHNICAL FIELD

The present application relates to the field of energy storage technology, and in particular, to a secondary battery and an electronic apparatus.

### BACKGROUND

In secondary batteries, the demand for higher energy density is increasing. In related secondary batteries, the cathode uses a terminal post to lead out polarity, and the portion of the terminal post recessed into the housing occupies a certain dimension, resulting in a relatively large gap between the cathode tab and the housing. The portion of the terminal post protruding outside the housing also occupies a dimension of the secondary battery, leading to a loss of energy density.

### SUMMARY

In view of this, it is necessary to provide a secondary battery and an electronic apparatus, which can reduce the dimension of the secondary battery and increase the volumetric energy density of the secondary battery.

According to a first aspect of some embodiments of the present application, a secondary battery is provided and includes: a first shell, a second shell, and an electrode assembly. The first shell is a conductor; and the first shell includes a first portion and a second portion, where the second portion surrounds an edge of the first portion and encloses with the first portion to form a first cavity. The second shell is a conductor; and the second shell includes a third portion and a fourth portion, where the fourth portion surrounds an edge of the third portion and encloses with the third portion to form a second cavity. The second shell and the first shell are assembled together, the first cavity and the second cavity are in communication to form an accommodating cavity, and the second shell is insulatedly connected to the first shell. The electrode assembly is accommodated in the accommodating cavity; the electrode assembly includes a plurality of first electrode plates and a plurality of second electrode plates, where the plurality of first electrode plates are electrically connected to each other, and the plurality of second electrode plates are electrically connected to each other; an outermost first electrode plate of the electrode assembly is a first sub-electrode plate; an outermost second electrode plate of the electrode assembly is a second sub-electrode plate. The first sub-electrode plate and the second sub-electrode plate are respectively located at two outermost sides of the electrode assembly in a thickness direction of the electrode assembly. The first sub-electrode plate includes a first current collector and a first active material layer, where the first current collector has a first surface and a second surface opposite to each other, the first surface is a surface of the first current collector facing away from the second sub-electrode plate, the first surface has a first bare foil region, the first bare foil region is electrically connected to the first portion, and the first active material layer is disposed on the second surface; the second sub-electrode plate includes a second current collector and a second active material layer, where the second current collector has a third surface and a fourth surface opposite to each other, the third surface is a surface of the second current collector facing away from the first sub-electrode plate, the third surface has a second bare foil region, the second bare foil region is electrically connected to the third portion, and the second active material layer is disposed on the fourth surface.

By providing a bare foil region on one surface of the first current collector and the second current collector, the first surface of the first current collector is directly electrically connected to the first shell through the first bare foil region, and the third surface of the second current collector is directly electrically connected to the second shell through the second bare foil region. The first electrode plate and the second electrode plate can lead out polarity through the first shell and the second shell, eliminating the need to provide terminal posts on the first shell and the second shell. Compared to the solution of leading out polarity through tabs, this solution also eliminates the need to reserve space for welding fixtures, thereby facilitating a reduction in the overall dimension of the secondary battery and increasing the volumetric energy density of the secondary battery. Moreover, compared to the solution of connecting tabs to the housing, this solution can reduce the risk of tabs being pulled and broken due to the housing during a drop, thereby improving the safety performance of the secondary battery.

In at least one embodiment, along a thickness direction of the secondary battery, the first electrode plates and the second electrode plates are alternately arranged; the electrode assembly further includes a plurality of first tabs, where the first tabs are electrically connected to the first current collector, and the plurality of first tabs are stacked to form a first tab group; and the electrode assembly further includes a plurality of second tabs, where the second tabs are electrically connected to the second current collector, and the plurality of second tabs are stacked to form a second tab group.

The arrangement of the first tab group enables electrical connection between the plurality of first electrode plates, allowing the plurality of first electrode plates to lead out polarity to the first shell through the first sub-electrode plate; and the arrangement of the second tab group enables electrical connection between the plurality of second electrode plates, allowing the plurality of second electrode plates to lead out polarity to the second shell through the second sub-electrode plate.

In at least one embodiment, along the thickness direction of the secondary battery, the plurality of first electrode plates and the plurality of second electrode plates are stacked to form a main body portion of the electrode assembly, the first tab group is stacked between the second portion and the main body portion or between the fourth portion and the main body portion, and the second tab group is stacked between the fourth portion and the main body portion or between the second portion and the main body portion.

The first tab group and the second tab group are respectively stacked, which is advantageous for reducing the space occupied by the first tab group and the second tab group in the accommodating cavity, as well as the overall space occupied by the electrode assembly, thereby facilitating an increase in the volumetric energy density of the secondary battery.

In at least one embodiment, the secondary battery includes a first adhesive member, where the first adhesive member is a conductor; the first adhesive member is bonded between the first surface and the first portion, and/or the first adhesive member is bonded between the third surface and the third portion.

The first adhesive member can fix the electrode assembly to the first portion or the third portion, making the electrode assembly less likely to move within the accommodating cavity during a drop test, thus improving the drop performance of the secondary battery. Moreover, the first adhesive member, serving as a conductor, can enhance the stability of the electrical connection between the first surface and the first shell or between the third surface and the second shell.

In at least one embodiment, the first portion has a first conductive surface, the first conductive surface has a first protrusion, and the first protrusion is electrically connected to the first surface; and/or
the third portion has a second conductive surface, the second conductive surface has a second protrusion, and the second protrusion is electrically connected to the third surface.

The cooperation between the first protrusion and the first surface is advantageous for increasing the friction between the first surface and the first conductive surface, making it less likely for the electrode assembly and the first shell to move relative to each other, thereby improving the stability of the electrical connection between the first sub-electrode plate and the first shell. The cooperation between the second protrusion and the third surface is advantageous for increasing the friction between the third surface and the second conductive surface, making it less likely for the electrode assembly and the second shell to move relative to each other, thereby improving the stability of the electrical connection between the second sub-electrode plate and the second shell.

In at least one embodiment, the second shell includes a second adhesive member, where the second adhesive member is filled between the first surface and the first conductive surface, and the second adhesive member is located at a portion of the first conductive surface on which the first protrusion is not provided, and/or the second adhesive member is filled between the third surface and the second conductive surface, and the second adhesive member is located at a portion of the second conductive surface on which the second protrusion is not provided.

The second adhesive member can further enhance the stability of the electrical connection between the first surface and the first conductive surface and/or between the third surface and the second conductive surface. Additionally, the second adhesive member can avoid the first protrusion, allowing the first surface and the first shell to achieve electrical connection through the contact between the first protrusion and the first surface, and/or the second adhesive member can avoid the second protrusion, allowing the third surface and the second shell to achieve electrical connection through the contact between the second protrusion and the third surface.

In at least one embodiment, the second portion has a first edge, and the fourth portion has a second edge; and along the thickness direction of the secondary battery, the first shell and the second shell are assembled together by aligning and connecting the first edge and the second edge.

In at least one embodiment, the secondary battery further includes an insulating seal, where the insulating seal includes a first sealing portion, a second sealing portion, and a third sealing portion, the third sealing portion is connected between the first sealing portion and the second sealing portion, the first sealing portion is wound and bonded to an outer periphery of the second portion, and the second sealing portion is wound and bonded to an outer periphery of the fourth portion, an insulating gap is formed between the first shell and the second shell, and the third sealing portion seals the insulating gap.

The provision of the insulating seal insulates the first shell from the second shell and seals the accommodating cavity.

In at least one embodiment, a peeling strength between the insulating seal and the first shell, a peeling strength between the insulating seal and the second shell, are both F, wherein F ≥ 0.5 N/mm² .

Since the electrode assembly is closely attached to the first shell and the second shell through the first sub-electrode plate and the second sub-electrode plate, it needs to resist the swelling force caused by the swelling of the electrode assembly during long-term use of the secondary battery. A peeling strength of F ≥ 0.5 N/mm² is advantageous for the insulating seal to overcome the aforementioned swelling force, improving the sealing performance of the secondary battery when subjected to the swelling force of the electrode assembly.

In at least one embodiment, F ≥ 1 N/mm², further improving the sealing performance of the secondary battery when subjected to the swelling force of the electrode assembly.

In at least one embodiment, the first sealing portion, the second sealing portion, and the third sealing portion are integrally formed.

The integral formation approach allows the entire insulating seal to be directly bonded to the first shell and the second shell, reducing the number of adhesion steps; and also reduces the formation of splicing seams between the third sealing portion and the second sealing portion or the first sealing portion, improving the sealing effect of the insulating seal.

In at least one embodiment, a width of the first sealing portion is W₁, wherein 0.1 mm ≤ W₁ ≤ 3 mm; and/or a width of the second sealing portion is W₂, wherein 0.1 mm ≤ W₂ ≤ 3 mm.

This ensures that the insulating seal has sufficient adhesion area with the first shell and the second shell, thereby improving the sealing performance between the first shell and the second shell and enhancing the long-term sealing effect of the secondary battery. Additionally, this ensures that the adhesion width is not excessively large, facilitating a reduction in the impact on the volume of the secondary battery and minimizing the loss of volumetric energy density of the secondary battery.

In at least one embodiment, 0.3 mm ≤ W₁ ≤ 1.5 mm, and/or 0.3 mm ≤ W₂ ≤ 1.5 mm. This further increases the energy density of the secondary battery while enhancing the long-term sealing effect of the secondary battery.

In at least one embodiment, at least a portion of the third sealing portion is located in the insulating gap.

The third sealing portion can support the first shell and the second shell, facilitating the maintenance of the insulating gap and ensuring insulation between the first shell and the second shell. Moreover, the third sealing portion can seal the insulating gap, ensuring the sealing performance between the first shell and the second shell.

According to a second aspect of the present application, an electronic apparatus is provided and includes the secondary battery according to any one of the above embodiments.

### BRIEF DESCRIPTION OF DRAWINGS

FIG. 1 is a perspective view of a secondary battery according to an embodiment of the present application.
FIG. 2 is an exploded view of the secondary battery in FIG. 1.
FIG. 3 is a schematic diagram of an electrode assembly according to an embodiment of the present application.
FIG. 4 is a cross-sectional view of a secondary battery according to an embodiment of the present application, illustrating the connection relationship between a first electrode plate and a first shell.
FIG. 5 is an enlarged view of portion V in FIG. 4.
FIG. 6 is a cross-sectional view of a secondary battery according to an embodiment of the present application, illustrating the connection relationship between a second electrode plate and a second shell.
FIG. 7 is an enlarged view of portion VII in FIG. 6.
FIG. 8 is a partial cross-sectional view for illustrating the connection relationship between a first portion and a first sub-electrode plate according to an embodiment of the present application.
FIG. 9 is a partial cross-sectional view for illustrating the connection relationship between a third portion and a second sub-electrode plate according to an embodiment of the present application.
FIG. 10 is a partial cross-sectional view for illustrating the connection relationship between a first protrusion and a first surface according to an embodiment of the present application.
FIG. 11 is a partial cross-sectional view for illustrating the connection relationship between the first protrusion and the first recess according to an embodiment of the present application.
FIG. 12 is a partial cross-sectional view for illustrating the connection relationship between the second protrusion and the third surface according to an embodiment of the present application.
FIG. 13 is a partial cross-sectional view for illustrating the connection relationship between the second protrusion and the second recess according to an embodiment of the present application.
FIG. 14 is a partial cross-sectional view of a secondary battery according to an embodiment of the present application, illustrating the connection relationship between the housing and the insulating seal.
FIG. 15 is a schematic diagram of an electronic apparatus according to an embodiment of the present application.

### DESCRIPTION OF REFERENCE SIGNS

1000: electronic apparatus; 100: secondary battery; 10: electrode assembly; 10a: first tab group; 10b: second tab group; 10c: main body portion; 11: first electrode plate; 11a: first sub-electrode plate; 111: first current collector; 1111: first surface; 1112: second surface; 1113: first recess; 112: first active material layer; 12: second electrode plate; 12a: second sub-electrode plate; 121: second current collector; 1211: third surface; 1212: fourth surface; 1213: second recess; 122: second active material layer; 13: separator; 14: first tab; 15: second tab; 20: housing; 21: first shell; 211: first portion; 2111: first conductive surface; 2112: first protrusion; 212: second portion; 2121: first edge; 213: first cavity; 22: second shell; 221: third portion; 2211: second conductive surface; 2212: second protrusion; 222: fourth portion; 2221: second edge; 223: second cavity; 23: insulating gap; 30: first adhesive member; 40: second adhesive member; 50: insulating seal; 51: first sealing portion; 52: second sealing portion; 53: third sealing portion; and X: first direction.

The following detailed description will further explain the present application in conjunction with the above accompanying drawings.

### DETAILED DESCRIPTION

The technical solutions in some embodiments of the present application will be described below with reference to the accompanying drawings in these embodiments of the present application. It is apparent that the described embodiments are only some of these embodiments of the present application, not all of them.

In the description of some embodiments of the present application, technical terms such as "first" and "second" are used only to distinguish different objects and should not be understood as indicating or implying relative importance or implying the number, specific order, or primary-secondary relationship of the indicated technical features.

In secondary batteries, the demand for higher energy density is increasing. In related secondary batteries, the cathode uses a terminal post to lead out polarity, and the portion of the terminal post recessed into the shell occupies a certain dimension, resulting in a relatively large gap between the cathode tab and the shell. The portion of the terminal post protruding outside the shell also occupies a dimension of the secondary battery, leading to a loss of energy density.

According to a first aspect of some embodiments of the present application, a secondary battery is provided and includes: a first shell, a second shell, and an electrode assembly. The first shell is a conductor; and the first shell includes a first portion and a second portion, where the second portion surrounds an edge of the first portion and encloses with the first portion to form a first cavity. The second shell is a conductor; and the second shell includes a third portion and a fourth portion, where the fourth portion surrounds an edge of the third portion and encloses with the third portion to form a second cavity. The second shell and the first shell are assembled together, the first cavity and the second cavity are in communication to form an accommodating cavity, and the second shell is insulatedly connected to the first shell. The electrode assembly is accommodated in the accommodating cavity; the electrode assembly includes a plurality of first electrode plates and a plurality of second electrode plates, where the plurality of first electrode plates are electrically connected to each other, and the plurality of second electrode plates are electrically connected to each other; an outermost first electrode plate of the electrode assembly is a first sub-electrode plate; an outermost second electrode plate of the electrode assembly is a second sub-electrode plate. The first sub-electrode plate and the second sub-electrode plate are respectively located at two outermost sides of the electrode assembly in a thickness direction of the electrode assembly. The first sub-electrode plate includes a first current collector and a first active material layer, where the first current collector has a first surface and a second surface opposite to each other, the first surface is a surface of the first current collector facing away from the second sub-electrode plate, the first surface has a first bare foil region, the first bare foil region is electrically connected to the first portion, and the first active material layer is disposed on the second surface; the second sub-electrode plate includes a second current collector and a second active material layer, where the second current collector has a third surface and a fourth surface opposite to each other, the third surface is a surface of the second current collector facing away from the first sub-electrode plate, the third surface has a second bare foil region, the second bare foil region is electrically connected to the third portion, and the second active material layer is disposed on the fourth surface.

By providing a bare foil region on one surface of the first current collector and the second current collector, the first surface of the first current collector is directly electrically connected to the first shell through the first bare foil region, and the third surface of the second current collector is directly electrically connected to the second shell through the second bare foil region. The first electrode plate and the second electrode plate can lead out polarity through the first shell and the second shell, eliminating the need to provide terminal posts on the first shell and the second shell. Compared to the solution of leading out polarity through tabs, this solution also eliminates the need to reserve space for welding fixtures, thereby facilitating a reduction in the overall dimension of the secondary battery and increasing the volumetric energy density of the secondary battery. Moreover, compared to the solution of connecting tabs to the housing, this solution can reduce the risk of tabs being pulled and broken due to the housing during a drop, thereby improving the safety performance of the secondary battery.

Some embodiments of the present application will be further described below with reference to the accompanying drawings.

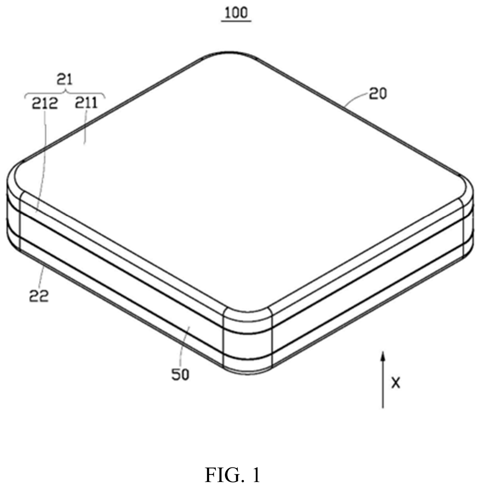

As shown in FIG. 1 to FIG. 3, a first embodiment of the present application provides a secondary battery 100, where the secondary battery 100 includes an electrode assembly 10 and a housing 20, the housing 20 has an accommodating cavity, and the electrode assembly 10 is accommodated in the accommodating cavity. The electrode assembly 10 includes a first electrode plate 11, a second electrode plate 12, and a separator 13, where the separator 13 is disposed between the first electrode plate 11 and the second electrode plate 12, and the separator 13 is configured to isolate the first electrode plate 11 from the second electrode plate 12.

In some embodiments, the housing 20 is a hard housing, for example, the housing 20 includes a metal housing made of at least one of steel alloy, aluminum alloy, or copper alloy.

In some embodiments, an electrolyte (not shown in the figure) is injected into the accommodating cavity of the housing 20, where the electrolyte includes a solvent, an electrolyte salt, and an additive.

In some embodiments, the electrolyte salt includes at least one of an organic lithium salt or an inorganic lithium salt.

In some embodiments, the first electrode plate 11 and the second electrode plate 12 have different polarities. For example, the first electrode plate 11 is an anode plate, and the second electrode plate 12 is a cathode plate. For another example, the first electrode plate 11 is a cathode plate, and the second electrode plate 12 is an anode plate.

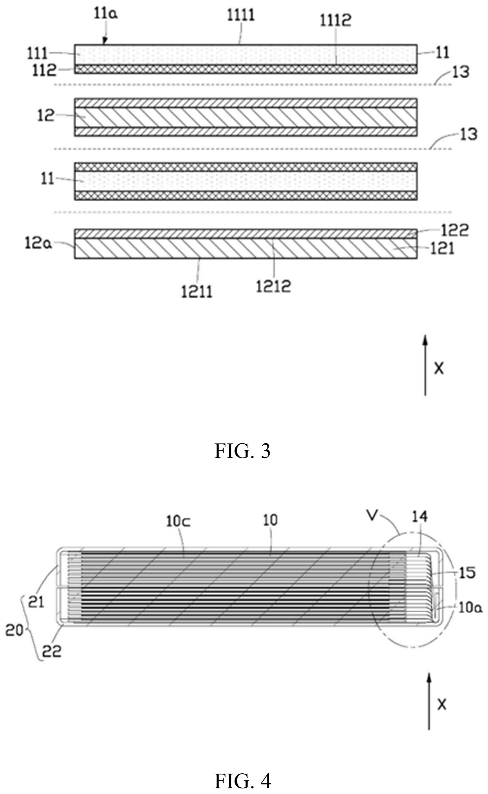

Referring to FIG. 3, in some embodiments, the first electrode plate 11 includes a first current collector 111 and a first active material layer 112, where along a thickness direction of the first electrode plate 11, the first current collector 111 includes two surfaces disposed opposite to each other, and the first active material layer 112 is disposed on at least one surface of the first current collector 111 along the thickness direction of the first current collector 111. The thickness direction of the first current collector 111 is consistent with a thickness direction of the first electrode plate 11, both being a first direction X.

Referring to FIG. 3, in some embodiments, the second electrode plate 12 includes a second current collector 121 and a second active material layer 122. Along a thickness direction of the second electrode plate 12, the second current collector 121 has two surfaces disposed opposite to each other, and a thickness direction of the second electrode plate 12 is consistent with a thickness direction of the second current collector 121. Along the thickness direction of the second current collector 121, the second active material layer 122 is disposed on at least one surface of the second current collector 121. The thickness direction of the second current collector 121 is the first direction X.

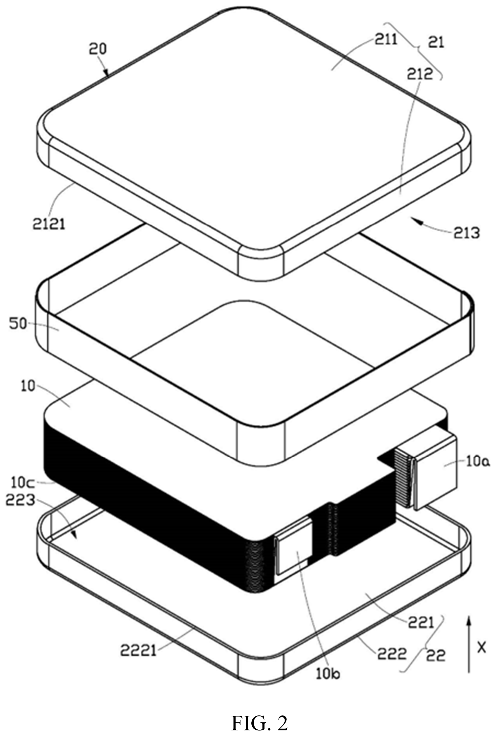

Referring to FIG. 1 and FIG. 2, in some embodiments, the first shell 21 is a conductor. The first shell 21 includes a first portion 211 and a second portion 212, where the second portion 212 surrounds an edge of the first portion 211 and encloses with the first portion 211 to form a first cavity 213. The second shell 22 is a conductor. The second shell 22 includes a third portion 221 and a fourth portion 222, where the fourth portion 222 surrounds an edge of the third portion 221 and encloses with the third portion 221 to form a second cavity 223. The second shell 22 and the first shell 21 are assembled together, the first cavity 213 and the second cavity 223 are in communication to form an accommodating cavity, and the second shell 22 is insulatedly connected to the first shell 21.

Referring to FIG. 3 to FIG. 5, the electrode assembly 10 includes a plurality of first electrode plates 11 and a plurality of second electrode plates 12, where the plurality of first electrode plates 11 are electrically connected to each other, and the plurality of second electrode plates 12 are electrically connected to each other. The outermost first electrode plate 11 of the electrode assembly 10 is a first sub-electrode plate 11a, and the outermost second electrode plate 12 of the electrode assembly 10 is a second sub-electrode plate 12a. The first sub-electrode plate 11a and the second sub-electrode plate 12a are respectively located at two outermost sides of the electrode assembly 10 in a thickness direction of the electrode assembly 10. It should be understood that FIG. 3 is only used to illustrate the positional relationship between the first sub-electrode plate 11a, the second sub-electrode plate 12a, and the inner electrode plates, and does not limit the numbers of first electrode plates 11 and second electrode plates 12 in the electrode assembly 10.

The first sub-electrode plate 11a includes a first current collector 111 and a first active material layer 112, where along the thickness direction of the first current collector 111, the first current collector 111 has a first surface 1111 and a second surface 1112 opposite to each other, the first surface 1111 is a surface of the first current collector 111 facing away from the second sub-electrode plate 12a, the first surface 1111 has a first bare foil region, the first bare foil region is electrically connected to the first portion 211, and the first active material layer 112 of the first sub-electrode plate 11a is disposed on the second surface 1112. The second sub-electrode plate 12a includes a second current collector 121 and a second active material layer 122, where along the thickness direction of the second current collector 121, the second current collector 121 has a third surface 1211 and a fourth surface 1212 opposite to each other, the third surface 1211 is a surface of the second current collector 121 facing away from the first sub-electrode plate 11a, the third surface 1211 has a second bare foil region, the second bare foil region is electrically connected to the third portion 221, and the second active material layer 122 of the second sub-electrode plate 12a is disposed on the fourth surface 1212.

By providing a bare foil region on one surface of the first current collector 111 and the second current collector 121, the first surface 1111 of the first current collector 111 is directly electrically connected to the first shell 21 through the first bare foil region, and the third surface 1211 of the second current collector 121 is directly electrically connected to the second shell 22 through the second bare foil region. The first electrode plate 11 and the second electrode plate 12 can lead out polarity through the first shell 21 and the second shell 22, eliminating the need to provide terminal posts on the first shell 21 and the second shell 22. Compared to the solution of leading out polarity through tabs, this solution also eliminates the need to reserve space for welding fixtures, thereby facilitating a reduction in the overall dimension of the secondary battery 100 and increasing the volumetric energy density of the secondary battery 100. Moreover, compared to the solution of connecting tabs to the housing 20, this solution can reduce the risk of tabs being pulled and broken from the housing 20 during a drop, thereby improving the safety performance of the secondary battery 100.

It should be understood that, after use of the secondary battery 100, the electrode assembly 10 will experience a certain degree of swelling in the thickness direction. In the expanded electrode assembly 10, the first sub-electrode plate 11a deforms toward the first portion 211, thereby increasing the force between the first surface 1111 and the first portion 211, and enhancing the electrical connection stability between the first sub-electrode plate 11a and the first shell 21; and the second sub-electrode plate 12a deforms toward the third portion 221, thereby increasing the force between the third surface 1211 and the third portion 221, and enhancing the electrical connection stability between the second sub-electrode plate 12a and the second shell 22.

In some embodiments, a partial region of the first surface 1111 of the first current collector 111 is configured as the first bare foil region, or the entire region of the first surface 1111 of the first current collector 111 is configured as the first bare foil region. Compared to the solution where only a partial region is configured as the first bare foil region, configuring the entire region as the first bare foil region can improve the electrical connection effect between the first surface 1111 and the first shell 21.

In some embodiments, a partial region of the third surface 1211 of the second current collector 121 is configured as the second bare foil region, or the entire region of the third surface 1211 of the second current collector 121 is configured as the second bare foil region. Compared to the solution where only a partial region is configured as the second bare foil region, configuring the entire region as the second bare foil region can improve the electrical connection effect between the third surface 1211 and the second shell 22.

In some embodiments, the first bare foil region is a surface of the first current collector 111 on which the first active material layer 112 is not disposed, but a small amount of active material that does not affect the electrical connection effect is also within the scope of the first bare foil region. The second bare foil region is a surface of the second current collector 121 on which the second active material layer 122 is not disposed, but a small amount of active material that does not affect the electrical connection effect is also within the scope of the second bare foil region.

Referring to FIG. 2, in some embodiments, the first portion 211 and the third portion 221 are configured in a flat plate shape and form the top and bottom of the housing 20, and the second portion 212 and the fourth portion 222 form the side portions of the housing 20.

Referring to FIG. 2 and FIG. 4, in some embodiments, the second portion 212 has a first edge 2121, and the fourth portion 222 has a second edge 2221. Along the thickness direction of the secondary battery 100, the first shell 21 and the second shell 22 are assembled together by aligning and connecting the first edge 2121 and the second edge 2221. An insulating gap 23 is formed between the first edge 2121 and the second edge 2221. Herein, "aligning and connecting" means that the shapes and dimensions of the first edge 2121 and the second edge 2221 are substantially the same, allowing for some tolerance when the first edge 2121 and the second edge 2221 are aligned; where the "connection" refers to an indirect connection, for example, the first edge 2121 and the second edge 2221 are connected through insulating adhesive tape.

Compared to the solution where the first edge 2121 and the second edge 2221 are misaligned, the solution of aligning the first edge 2121 and the second edge 2221 can reduce the overall dimension of the first shell 21 and the second shell 22 after being covered, thereby facilitating a reduction in the volume of the secondary battery 100 and increasing the volumetric energy density of the secondary battery 100.

Referring to FIG. 4 to FIG. 7, in some embodiments, along the thickness direction of the secondary battery 100, the first electrode plates 11 and the second electrode plates 12 are alternately arranged. The electrode assembly 10 further includes a plurality of first tabs 14, where the first tabs 14 are electrically connected to the first current collector 111, and the plurality of first tabs 14 are stacked to form a first tab group 10a; and the electrode assembly 10 further includes a plurality of second tabs 15, where the second tabs 15 are electrically connected to the second current collector 121, and the plurality of second tabs 15 are stacked to form a second tab group 10b.

The arrangement of the first tab group 10a enables electrical connection between the plurality of first electrode plates 11, allowing the plurality of first electrode plates 11 to lead out polarity to the first shell 21 through the first sub-electrode plate 11a. The arrangement of the second tab group 10b enables electrical connection between the plurality of second electrode plates 12, allowing the plurality of second electrode plates 12 to lead out polarity to the second shell 22 through the second sub-electrode plate 12a.

In some embodiments, the first tab group 10a and the second tab group 10b have no direct structural connection. This makes it less likely for the first tabs 14 and the second tabs 15 to be pulled and broken by the housing 20 during a drop condition, improving the drop resistance of the secondary battery 100.

In some embodiments, the first tab group 10a and the second tab group 10b are disposed on the same side of the electrode assembly 10 in a length direction of the electrode assembly 10, thereby reducing the space occupied by the first tab group 10a and the second tab group 10b in the length direction of the electrode assembly 10, facilitating a reduction in the volume of the secondary battery 100.

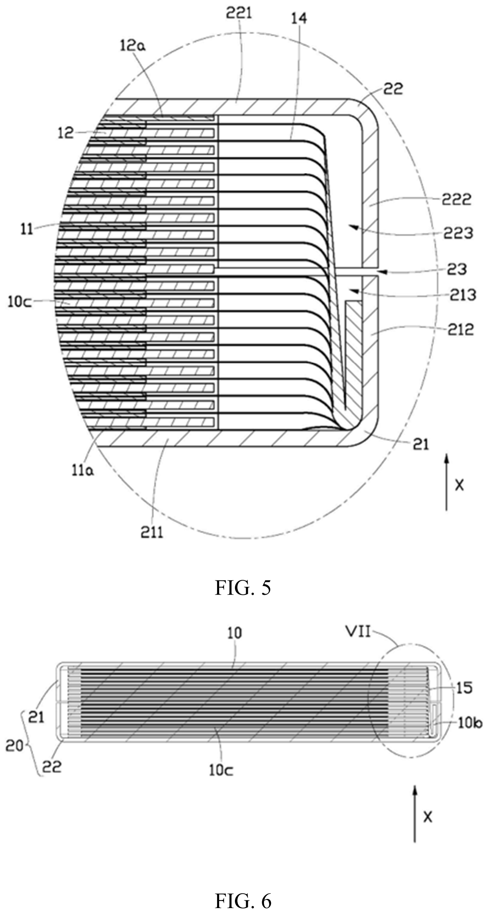

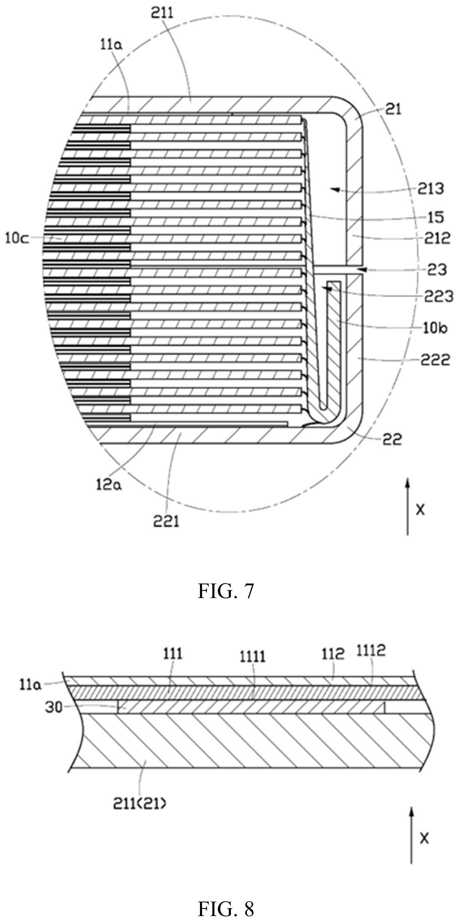

Referring to FIG. 5 and FIG. 7, in some embodiments, the plurality of first electrode plates 11 and the plurality of second electrode plates 12 are stacked to form a main body portion 10c of the electrode assembly 10, the first tab group 10a is stacked between the second portion 212 and the main body portion 10c or between the fourth portion 222 and the main body portion 10c, and the second tab group 10b is stacked between the fourth portion 222 and the main body portion 10c or between the second portion 212 and the main body portion 10c. As shown in FIG. 5, the first tab group 10a is stacked between the second portion 212 and the main body portion 10c; and as shown in FIG. 7, the second tab group 10b is stacked between the fourth portion 222 and the main body portion 10c.

The first tab group 10a and the second tab group 10b are respectively stacked, which is advantageous for reducing the space occupied by the first tab group 10a and the second tab group 10b in the accommodating cavity, as well as the overall space occupied by the electrode assembly 10. Furthermore, as can be seen from FIG. 4 and FIG. 6, the first tab group 10a and the second tab group 10b are stacked on the side portions of the secondary battery 100, thereby reducing the space occupied in the thickness direction of the secondary battery 100, and facilitating an increase in the volumetric energy density of the secondary battery 100.

Referring to FIG. 8, in some embodiments, the secondary battery 100 includes a first adhesive member 30, where the first adhesive member 30 is a conductor, and the first adhesive member 30 is bonded between the first surface 1111 and the first portion 211.

The first adhesive member 30 can fix the electrode assembly 10 to the first portion 211, making the electrode assembly 10 less likely to move relative to the first shell 21 during a drop test, thus improving the drop performance of the secondary battery 100. Moreover, the first adhesive member 30, serving as a conductor, can enhance the electrical connection stability between the first surface 1111 and the first shell 21.

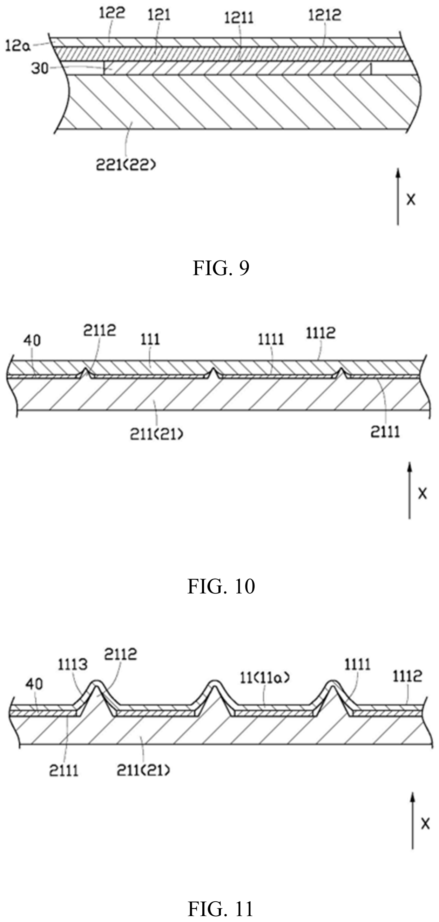

Referring to FIG. 9, in some embodiments, the first adhesive member 30 is bonded between the third surface 1211 and the third portion 221. The first adhesive member 30 can fix the electrode assembly 10 to the third portion 221, making the electrode assembly 10 less likely to move relative to the second shell 22 during a drop test, thus improving the drop performance of the secondary battery 100. Additionally, the first adhesive member 30, serving as a conductor, can enhance the electrical connection stability between the third surface 1211 and the second shell 22.

In some embodiments, the first adhesive member 30 is provided in two, one of the first adhesive members 30 is disposed between the first surface 1111 and the first portion 211, and the other of the first adhesive members 30 is disposed between the third surface 1211 and the third portion 221, to enhance the stability of the electrical connection between the electrode assembly 10 and the first shell 21 and the second shell 22.

Referring to FIG. 10 and FIG. 11, in some embodiments, the first portion 211 has a first conductive surface 2111, the first conductive surface 2111 has a first protrusion 2112, and the first protrusion 2112 is electrically connected to the first surface 1111 of the first current collector 111. For example, the first protrusion 2112 is a burr structure. Specifically, a burr structure is formed on the first conductive surface 2111 using a process such as laser texturing, as shown in FIG. 10, where the burr structure penetrates into the first current collector 111 from the first surface 1111. Alternatively, as shown in FIG. 11, under the action of the first protrusion 2112, the first current collector 111 deforms to form a first recess 1113, allowing the first protrusion 2112 to extend into the first recess 1113, achieving electrical connection between the first protrusion 2112 and the first recess 1113.

The cooperation between the first protrusion 2112 and the first current collector 111 is advantageous for increasing the friction between the first surface 1111 and the first conductive surface 2111, making it less likely for the electrode assembly 10 and the first shell 21 to move relative to each other, thereby improving the stability of the electrical connection between the first sub-electrode plate 11a and the first shell 21.

Referring to FIG. 10 or FIG. 11, in some embodiments, the second shell 22 includes a second adhesive member 40, where the second adhesive member 40 is filled between the first surface 1111 and the first conductive surface 2111, and the second adhesive member 40 is located at a portion of the first conductive surface 2111 on which the first protrusion 2112 is not provided. The second adhesive member 40 can further enhance the stability of the electrical connection between the first surface 1111 and the first conductive surface 2111. Additionally, the second adhesive member 40 can avoid the first protrusion 2112, allowing the first surface 1111 and the first shell 21 to achieve electrical connection through the contact between the first protrusion 2112 and the first current collector 111.

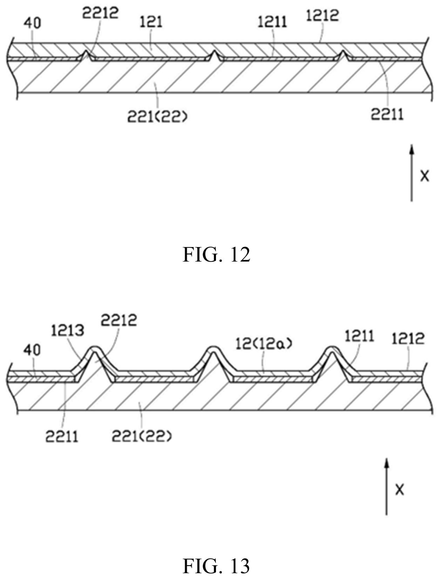

Referring to FIG. 12 and FIG. 13, in some embodiments, the third portion 221 has a second conductive surface 2211, the second conductive surface 2211 has a second protrusion 2212, and the second protrusion 2212 is electrically connected to the third surface 1211 of the second current collector 121. For example, the second protrusion 2212 is a burr structure. Specifically, a burr structure is formed on the second conductive surface 2211 using a process such as laser texturing, as shown in FIG. 12, where the burr structure penetrates into the second current collector 121 from the third surface 1211. Alternatively, as shown in FIG. 13, under the action of the second protrusion 2212, the second current collector 121 deforms to form a second recess 1213, allowing the second protrusion 2212 to extend into the second recess 1213, achieving electrical connection between the second protrusion 2212 and the second recess 1213.

The cooperation between the second protrusion 2212 and the second current collector 121 is advantageous for increasing the friction between the third surface 1211 and the second conductive surface 2211, making it less likely for the electrode assembly 10 and the second shell 22 to move relative to each other, thereby improving the stability of the electrical connection between the second sub-electrode plate 12a and the second shell 22.

Referring to FIG. 12 or FIG. 13, in some embodiments, the second shell 22 includes a second adhesive member 40, where the second adhesive member 40 is filled between the third surface 1211 and the second conductive surface 2211, and the second adhesive member 40 is located at a portion of the second conductive surface 2211 on which the second protrusion 2212 is not provided.

The second adhesive member 40 can further enhance the stability of the electrical connection between the third surface 1211 and the second conductive surface 2211. The second adhesive member 40 can avoid the second protrusion 2212, allowing the third surface 1211 and the second shell 22 to achieve electrical connection through the contact between the second protrusion 2212 and the second current collector 121.

In some embodiments, the second adhesive member 40 is an adhesive layer, and the material of the adhesive layer may be polypropylene or the like.

In some embodiments, the materials of the first shell 21, the first current collector 111, and the first tab 14 include the same metal material, and the materials of the second shell 22, the second current collector 121, and the second tab 15 include the same metal material, so as to reduce the potential difference between the first electrode plate 11 and the first shell 21 and the potential difference between the second electrode plate 12 and the second shell 22, thereby reducing the risk of electrochemical corrosion. For example, the first current collector 111 and the first tab 14 are both made of metallic aluminum, and the first shell 21 is made of an aluminum alloy; and the second current collector 121 and the second tab 15 are both made of metallic nickel, and the second shell 22 is made of a nickel alloy.

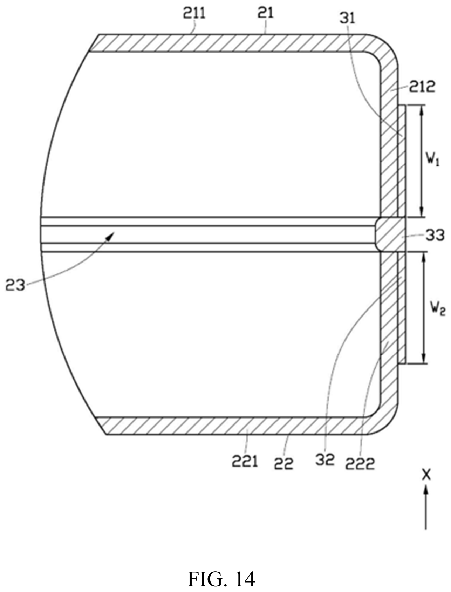

Referring to FIG. 1 and FIG. 14, in some embodiments, the secondary battery 100 further includes an insulating seal 50, where the insulating seal 50 includes a first sealing portion 51, a second sealing portion 52, and a third sealing portion 53, the third sealing portion 53 is connected between the first sealing portion 51 and the second sealing portion 52, the first sealing portion 51 is wound and bonded to an outer periphery of the second portion 212, and the second sealing portion 52 is wound and bonded to an outer periphery of the fourth portion 222. An insulating gap 23 is formed between the first shell 21 and the second shell 22, and the third sealing portion 53 seals the insulating gap 23. The provision of the insulating seal 50 insulates the first shell 21 from the second shell 22 and seals the accommodating cavity.

Additionally, by eliminating the terminal post, there is no need to consider the sealing issue at the joint between the terminal post and the housing 20. This can simplify the structure of the secondary battery 100, reduce the risk points for leakage in the secondary battery 100, and lower the cost of the secondary battery 100.

In some embodiments, since the electrode assembly 10 is closely attached to the first shell 21 and the second shell 22 through the first sub-electrode plate 11a and the second sub-electrode plate 12a, it needs to resist the swelling force caused by the swelling of the electrode assembly 10 during long-term use of the secondary battery 100, thus requiring enhanced adhesion of the insulating seal 50.

In some embodiments, a peeling strength between the insulating seal and the first shell, a peeling strength between the insulating seal and the second shell, are both F, wherein F ≥ 0.5 N/mm² . A peeling strength of F ≥ 0.5 N/mm² is advantageous for the insulating seal 50 to overcome the aforementioned swelling force, improving the sealing performance of the secondary battery 100 when subjected to the swelling force of the electrode assembly 10.

In some embodiments, F ≥ 1 N/mm², further improving the sealing performance of the secondary battery 100 when subjected to the swelling force of the electrode assembly 10.

In some embodiments, the test method for the peeling strength F is as follows: using a 6 mm wide insulating seal 50 as a test sample, setting a peeling speed of 20 mm/min, and measuring the peeling strength F between the insulating seal 50 and the first shell 21 and the second shell 22 after soaking the insulating seal 50 in an electrolyte at 85°C for 24 hours.

In some embodiments, the peeling strength is enhanced by subjecting the insulating seal 50 entirely or partially to maleic anhydride grafting modification.

The insulating seal 50 is made of PP (polypropylene). The reason for the enhanced adhesion of maleic anhydride grafted polypropylene to metal lies in the change in its chemical structure. The grafted polypropylene has increased polarity, forming stronger interactions and chemical bonding with the metal surface. Additionally, polar groups increase hydrogen bonding and van der Waals forces, improving interfacial compatibility and surface wettability, thereby enhancing the adhesion strength between the insulating seal 50 and the first shell 21 and the second shell 22. These factors work together to significantly enhance the adhesion between the grafted polypropylene and metals. Specifically, the maleic anhydride grafting rate is set to 0.01% to 5%. If the grafting rate is too low, the number of polar groups in maleic anhydride is insufficient to significantly enhance the polarity of polypropylene and its adhesion to metal; and if the grafting rate is too high, it may lead to a decrease in the mechanical properties of polypropylene, such as reduced toughness and ductility. Additionally, excessive polar groups may cause phase separation or uneven distribution, which is not conducive to further enhancing the adhesion.

Referring to FIG. 1 and FIG. 14, in some embodiments, the first sealing portion 51, the second sealing portion 52, and the third sealing portion 53 are integrally formed. The integral formation approach allows the entire insulating seal 50 to be directly bonded to the first shell 21 and the second shell 22, reducing the number of adhesion steps; and also reduces the formation of splicing seams between the third sealing portion 53 and the second sealing portion 52 or the first sealing portion 51, improving the sealing effect of the insulating seal 50.

Referring to FIG. 1 and FIG. 14, in some embodiments, the width of the first sealing portion 51 is W₁, wherein 0.1 mm ≤ W₁ ≤ 3 mm. As shown in the figure, when the second portion 212 is perpendicular to the first portion 211, the width direction of the first sealing portion 51 is the first direction X as shown in the figure. This ensures that the insulating seal 50 has sufficient adhesion area with the first shell 21, thereby improving the sealing performance between the first shell 21 and the second shell 22 and enhancing the long-term sealing effect of the secondary battery 100. Additionally, this ensures that the adhesion width is not excessively large, to be specific, the first sealing portion 51 does not exceed the second portion 212, facilitating a reduction in the impact on the volume of the secondary battery 100 and minimizing the loss of volumetric energy density of the secondary battery 100.

In some embodiments, 0.3 mm ≤ W₁ ≤ 1.5 mm, which can further improve the safety of the secondary battery 100 while enhancing the long-term sealing effect of the secondary battery 100.

Referring to FIG. 1 and FIG. 14, in some embodiments, the width of the second sealing portion 52 is W₂, wherein 0.1 mm ≤ W₂ ≤ 3 mm. As shown in the figure, when the fourth portion 222 is perpendicular to the third portion 221, the width direction of the first sealing portion 51 is the first direction X as shown in the figure. This ensures that the insulating seal 50 has sufficient adhesion area with the second shell 22, thereby improving the sealing performance between the first shell 21 and the second shell 22 and enhancing the long-term sealing effect of the secondary battery 100. Additionally, this ensures that the adhesion width is not excessively large, to be specific, the second sealing portion 52 does not exceed the fourth portion 222, facilitating a reduction in the impact on the volume of the secondary battery 100 and minimizing the loss of volumetric energy density of the secondary battery 100.

In some embodiments, 0.3 mm ≤ W₂ ≤ 1.5 mm, which can further increase the energy density of the secondary battery 100 while enhancing the long-term sealing effect of the secondary battery 100.

Referring to FIG. 14, in some embodiments, at least a portion of the third sealing portion 53 is located in the insulating gap 23. The third sealing portion 53 can support the first shell 21 and the second shell 22, facilitating the maintenance of the insulating gap 23 and ensuring insulation between the first shell 21 and the second shell 22. Moreover, the third sealing portion 53 can seal the insulating gap 23, ensuring the sealing performance between the first shell 21 and the second shell 22.

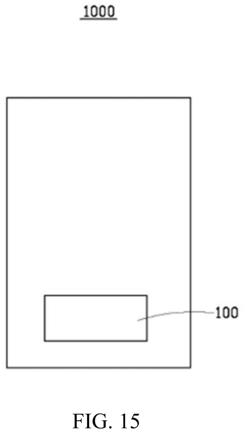

Referring to FIG. 15, an embodiment of the present application further provides an electronic apparatus 1000, where the electronic apparatus 1000 includes the secondary battery 100 according to any one of the above embodiments.

In some embodiments, the electronic apparatus 1000 may be a mobile phone, a laptop, a tablet computer, a drone, a power tool, an electric toy, a gaming console, a camcorder, a portable recorder, a radio, a smartwatch, or the like, which are not listed herein exhaustively.

Additionally, those skilled in the art should recognize that the above embodiments are only used to illustrate the present application and are not intended to limit the present application. Any appropriate changes and variations made to the above embodiments within the essential spirit and scope of the present application fall within the disclosed scope of the present application.

## Claims

1. A secondary battery (100), comprising:
a first shell (21), wherein the first shell (21) is a conductor; and the first shell (21) comprises a first portion (211) and a second portion (212), wherein the second portion (212) surrounds an edge of the first portion (211) and encloses with the first portion (211) to form a first cavity (213);
a second shell (22), wherein the second shell (22) is a conductor; the second shell (22) comprises a third portion (221) and a fourth portion (222), wherein the fourth portion (222) surrounds an edge of the third portion (221) and encloses with the third portion (221) to form a second cavity (223); the second shell (22) and the first shell (21) are assembled together, the first cavity (213) and the second cavity (223) are in communication to form an accommodating cavity, and the second shell (22) is insulatedly connected to the first shell (21); and
an electrode assembly (10), wherein the electrode assembly (10) is accommodated in the accommodating cavity; the electrode assembly (10) comprises a plurality of first electrode plates (11) and a plurality of second electrode plates (12), the plurality of first electrode plates (11) are electrically connected to each other, and the plurality of second electrode plates (12) are electrically connected to each other; an outermost first electrode plate (11) of the electrode assembly (10) is a first sub-electrode plate (11a); an outermost second electrode plate (12) of the electrode assembly (10) is a second sub-electrode plate (12a); the first sub-electrode plate (11a) and the second sub-electrode plate (12a) are respectively located at two outermost sides of the electrode assembly (10) in a thickness direction of the electrode assembly (10); wherein
the first sub-electrode plate (11a) comprises a first current collector (111) and a first active material layer (112), the first current collector (111) has a first surface (1111) and a second surface (1112) opposite to each other, the first surface (1111) is a surface of the first current collector (111) facing away from the second sub-electrode plate (12a), the first surface (1111) has a first bare foil region, the first bare foil region is electrically connected to the first portion (211), and the first active material layer (112) is disposed on the second surface (1112); the second sub-electrode plate (12a) comprises a second current collector (121) and a second active material layer (122), the second current collector (121) has a third surface (1211) and a fourth surface (1212) opposite to each other, the third surface (1211) is a surface of the second current collector (121) facing away from the first sub-electrode plate (11a), the third surface (1211) has a second bare foil region, the second bare foil region is electrically connected to the third portion (221), and the second active material layer (122) is disposed on the fourth surface (1212).

2. The secondary battery (100) according to claim 1, wherein along a thickness direction of the secondary battery (100), the first electrode plates (11) and the second electrode plates (12) are alternately arranged; the electrode assembly (10) further comprises a plurality of first tabs (14), wherein the first tabs (14) are electrically connected to the first current collector (111), and the plurality of first tabs (14) are stacked to form a first tab group (10a); and the electrode assembly (10) further comprises a plurality of second tabs (15), the second tabs (15) are electrically connected to the second current collector (121), and the plurality of second tabs (15) are stacked to form a second tab group (10b).

3. The secondary battery (100) according to claim 2, wherein along the thickness direction of the secondary battery (100), the plurality of first electrode plates (11) and the plurality of second electrode plates (12) are stacked to form a main body portion (10c) of the electrode assembly (10), the first tab group (10a) is stacked between the second portion (212) and the main body portion (10c) or between the fourth portion (222) and the main body portion (10c), and the second tab group (10b) is stacked between the fourth portion (222) and the main body portion (10c) or between the second portion (212) and the main body portion (10c).

4. The secondary battery (100) according to any one of claims 1 to 3, wherein the secondary battery (100) comprises a first adhesive member (30), the first adhesive member (30) is a conductor; the first adhesive member (30) is bonded between the first surface (1111) and the first portion (211), and/or the first adhesive member (30) is bonded between the third surface (1211) and the third portion (221).

5. The secondary battery (100) according to any one of claims 1 to 4, wherein the first portion (211) has a first conductive surface (2111), the first conductive surface (2111) has a first protrusion (2112), and the first protrusion (2112) is electrically connected to the first surface (1111); and/or
the third portion (221) has a second conductive surface (2211), the second conductive surface (2211) has a second protrusion (2212), and the second protrusion (2212) is electrically connected to the third surface (1211).

6. The secondary battery (100) according to claim 5, wherein the second shell (22) comprises a second adhesive member (40) ;
the second adhesive member (40) is filled between the first surface (1111) and the first conductive surface (2111), and the second adhesive member (40) is located at a portion of the first conductive surface (2111) on which the first protrusion (2112) is not provided, and/or the second adhesive member (40) is filled between the third surface (1211) and the second conductive surface (2211), and the second adhesive member (40) is located at a portion of the second conductive surface (2211) on which the second protrusion (2212) is not provided.

7. The secondary battery (100) according to any one of claims 1 to 6, wherein the second portion (212) has a first edge (2121), and the fourth portion (222) has a second edge (2221); and along the thickness direction of the secondary battery (100), the first shell (21) and the second shell (22) are assembled together by aligning and connecting the first edge (2121) and the second edge (2221).

8. The secondary battery (100) according to any one of claims 1 to 7, wherein the secondary battery (100) further comprises an insulating seal (50); the insulating seal (50) comprises a first sealing portion (51), a second sealing portion (52); and a third sealing portion (53), the third sealing portion (53) is connected between the first sealing portion (51) and the second sealing portion (52), the first sealing portion (51) is wound and bonded to an outer periphery of the second portion (212), and the second sealing portion (52) is wound and bonded to an outer periphery of the fourth portion (222), an insulating gap (23) is formed between the first shell (21) and the second shell (22), and the third sealing portion (53) seals the insulating gap (23).

9. The secondary battery (100) according to claim 8, wherein a peeling strength between the insulating seal (50) and the first shell (21), a peeling strength between the insulating seal (50) and the second shell (22), are both F, wherein F ≥ 0.5 N/mm².

10. The secondary battery (100) according to claim 9, wherein F ≥ 1 N/mm² .

11. The secondary battery (100) according to claim 8, wherein the first sealing portion (51), the second sealing portion (52), and the third sealing portion (53) are integrally formed.

12. The secondary battery (100) according to claim 8, wherein a width of the first sealing portion (51) is W₁, wherein 0.1 mm ≤ W₁ ≤ 3 mm; and/or
a width of the second sealing portion (52) is W₂, wherein 0.1 mm ≤ W₂ ≤ 3 mm.

13. The secondary battery (100) according to claim 12, wherein 0.3 mm ≤ W₁ ≤ 1.5 mm, and/or 0.3 mm ≤ W₂ ≤ 1.5 mm.

14. The secondary battery (100) according to claim 8, wherein at least a portion of the third sealing portion (53) is located in the insulating gap (23).

15. An electronic apparatus (1000), comprising the secondary battery (100) according to any one of claims 1 to 14.
